# EUROPEAN PATENT SPECIFICATION

(11) **EP 3 961 151 B1**
(45) Date of publication and mention of the grant of the patent: **11.10.2023**
(21) Application number: 21192822.1
(22) Date of filing: 24.08.2021
(51) Int. Cl.: G01C 15/00, E02D 17/18, E02D 17/20

(54) **SURVEYING SYSTEM, STAKING ASSISTANCE METHOD, AND STAKING ASSISTANCE PROGRAM**
VERMESSUNGSSYSTEM, ABSTECKASSISTENZVERFAHREN UND -PROGRAMM
SYSTÈME DE SURVEILLANCE, PROCÉDÉ D'ASSISTANCE AU TUTEURAGE ET PROGRAMME D'ASSISTANCE AU TUTEURAGE

(30) Priority: 25.08.2020 JP 2020141961
(43) Date of publication of application: 02.03.2022
(73) Proprietor: Topcon Corporation, Tokyo 174-8580 (JP)
(72) Inventor: SHIMIZU, Ryosuke, Tokyo, 1748580 (JP); ICHIRIYAMA, Umihiro, Tokyo, 1748580 (JP); MIYAJIMA, Motohiro, Tokyo, 1748580 (JP); TANAKA, Takashi, Tokyo, 1748580 (JP); NAKAMURA, Keisuke, Tokyo, 1748085 (JP)
(74) Representative: Schmitt-Nilson Schraud Waibel Wohlfrom Patentanwälte Partnerschaft mbB

(56) References cited:
- WO-A1-2018/109838
- JP-A- 2004 238 804
- JP-A- 2005 030 789
- JP-A- 2009 226 912

## Description

### BACKGROUND

The present disclosure relates to a surveying system, a staking assistance method, and a staking assistance program.

In civil engineering works, a slope staking tool is placed at a cutting start position (i.e., the top of a slope obtained by cutting) or a banking start position (i.e., the toe of a slope obtained by banking) to indicate the inclination of a slope (hereinafter referred to as a "designed slope") finished by cutting or banking. In addition, a cross-shaped staking tool is placed to indicate a target altitude for banking soil.

As described in Japanese Unexamined Patent Publication No. 2004-238804, for example, a slope staking tool includes two pickets put up in the ground, a crossbeam extending horizontally across the pickets, and a slope beam extending on the crossbeam along a designed slope.

JP 2005 030789 A shows a finishing stake setting apparatus comprising an inputting means for inputting finishing stake position information based on a measurement result obtained by the measurement of a surveying machine, a storage means for storing predetermined design data, a computing means for computing a numeric value regarding the position of a member for composing a finishing stake required for the concrete placement of the finishing stake, based on design data and position information, and a display means for displaying the computation result of the computing means.

### SUMMARY

While staking tools have been typically placed in horizontal planes, there is a recent demand for placing staking tools in slopes. The pickets constituting a staking tool need to be placed perpendicularly to the ground. In addition, unless a surveying device, such as a total station, for surveying the pickets, is placed in parallel to the ground, no surveying is possible. In order to place a staking tool in a slope, the pickets are put perpendicularly to the slope. For the purpose, a surveying device needs to be placed on the same slope. The surveying device which is assumed to be placed on a plane and thus fixed by a tripod or other means may fall down, which is dangerous.

From the foregoing, it is thus an objective of the present disclosure to provide a surveying system, a staking assistance method, and a staking assistance program that assist placement of a staking tool even in a slope.

In order to achieve the objective, a surveying system according to the present disclosure is for assisting placement of a slope staking tool including a picket, a crossbeam, and a slope beam. The surveying system includes a surveying device and a terminal device with a screen unit and comprises: a design information acquisition unit configured to acquire design information including a designed slope; a current slope estimation unit configured to calculate a current slope in accordance with a result of surveying the current slope in at least two points using the surveying device; a first intersection calculation unit configured to calculate a coordinate of a first intersection between the current slope and the designed slope using the current slope estimated by the current slope estimation unit and the design information including the designed slope, and to display the coordinate on the screen unit; and a second intersection calculation unit configured to calculate, using the surveying device, an altitude difference between any position on the crossbeam placed and a plane including the designed slope and to display the altitude difference on the screen unit.

In order to achieve the objective, a staking assistance method according to the present disclosure is a method of assisting placement of a slope staking tool including a picket, a crossbeam, and a slope beam, using a surveying system including a surveying device and a terminal device with a screen unit. The staking assistance method includes: design information acquisition of acquiring design information including a designed slope, using a design information acquisition unit; slope surveying of surveying a current slope in at least two points, using the surveying device; current slope estimation of calculating the current slope in accordance with a result of surveying in the slope surveying, using a current slope estimation unit; first intersection calculation of calculating a coordinate of a first intersection between the current slope and the designed slope using the current slope estimated in the current slope estimation and the design information including the designed slope and displaying the coordinate on the screen unit, using a first intersection calculation unit; and second intersection calculation of calculating, using the surveying device, an altitude difference between any position on the crossbeam placed and a plane including the designed slope and displaying the altitude difference on the screen unit, using a second intersection calculation unit.

In order to achieve the objective, a staking assistance program according to the present disclosure is a program of assisting placement of a slope staking tool including a picket, a crossbeam, and a slope beam, using a surveying system including a surveying device and a terminal device with a screen unit. The staking assistance program includes: design information acquisition of acquiring design information including a designed slope, using a design information acquisition unit; slope surveying of surveying a current slope in at least two points using the surveying device; current slope estimation of calculating the current slope in accordance with a result of surveying in the slope surveying, using a current slope estimation unit; first intersection calculation of calculating a coordinate of a first intersection between the current slope and the designed slope using the current slope estimated in the current slope estimation and the design information including the designed slope and displaying the coordinate on the screen unit, using a first intersection calculation unit; and second intersection calculation of calculating, using the surveying device, an altitude difference between any position on the crossbeam placed and a plane including the designed slope and displaying the altitude difference on the screen unit, using a second intersection calculation unit.

In order to achieve the objective, a surveying system according to the present disclosure is for assisting placement of a cross-shaped staking tool including a picket and a crossbeam. The surveying system includes a surveying device and a terminal device with a screen unit and comprises: a design information acquisition unit configured to acquire design information including a designed slope; a slope forming point acquisition unit configured to acquire position information on at least two points from the design information forming a reference slope; a reference slope estimation unit configured to estimate the reference slope in accordance with the position information acquired on the at least two forming points; and a slope altitude difference calculation unit configured to calculate a distance from a position of surveying using the surveying device to the reference slope in a normal direction of the reference slope and to display the distance on the screen unit.

In order to achieve the objective, a staking assistance method according to the present disclosure is a method of assisting placement of a cross-shaped staking tool including a picket and a crossbeam, using a surveying system including a surveying device and a terminal device with a screen unit. The staking assistance method includes: design information acquisition of acquiring design information including a designed cross section, using a design information acquisition unit; slope forming point acquisition of acquiring position information on at least two points from the design information forming a reference slope, using a slope forming point acquisition unit; reference slope estimation of estimating the reference slope in accordance with the position information on the at least two points acquired in the slope forming point acquisition, using a reference slope estimation unit; and slope altitude difference calculation of calculating a distance from a position of surveying using the surveying device to the reference slope in a normal direction of the reference slope and displaying the distance on the screen unit, using a slope altitude difference calculation unit.

In order to achieve the objective, a staking assistance program according to the present disclosure is a program of assisting placement of a cross-shaped staking tool including a picket and a crossbeam, using a surveying system including a surveying device and a terminal device with a screen unit. The staking assistance program includes: design information acquisition of acquiring design information including a designed cross section, using a design information acquisition unit; slope forming point acquisition of acquiring position information on at least two points forming a reference slope, using a slope forming point acquisition unit; reference slope estimation of estimating the reference slope in accordance with the position information on the at least two points from the design information acquired in the slope forming point acquisition, using a reference slope estimation unit; and slope altitude difference calculation of calculating a distance from a position of surveying using the surveying device to the reference slope in a normal direction of the reference slope and displaying the distance on the screen unit, using a slope altitude difference calculation unit.

The present disclosure assists the placement of a staking tool even in a slope.

### BRIEF DESCRIPTION OF THE DRAWINGS

FIG. 1 illustrates placement of a slope staking tool in a slope.
FIG. 2 shows a configuration of a surveying system according to an embodiment of the present disclosure.
FIG. 3 illustrates placement of a slope staking tool in a slope.
FIG. 4 is a flowchart illustrating a flow of the processing according to a staking assistance method and a staking assistance program using the surveying system according to an embodiment of the present disclosure.
FIG. 5 is an example screen displayed on a screen unit of a terminal device.
FIG. 6 illustrates placement of a cross-shaped staking tool in a slope.
FIG. 7 is a flowchart illustrating a flow of the processing according to a staking assistance method and a staking assistance program using the surveying system according to another embodiment of the present disclosure.

### DETAILED DESCRIPTION

### <Slope Stake>

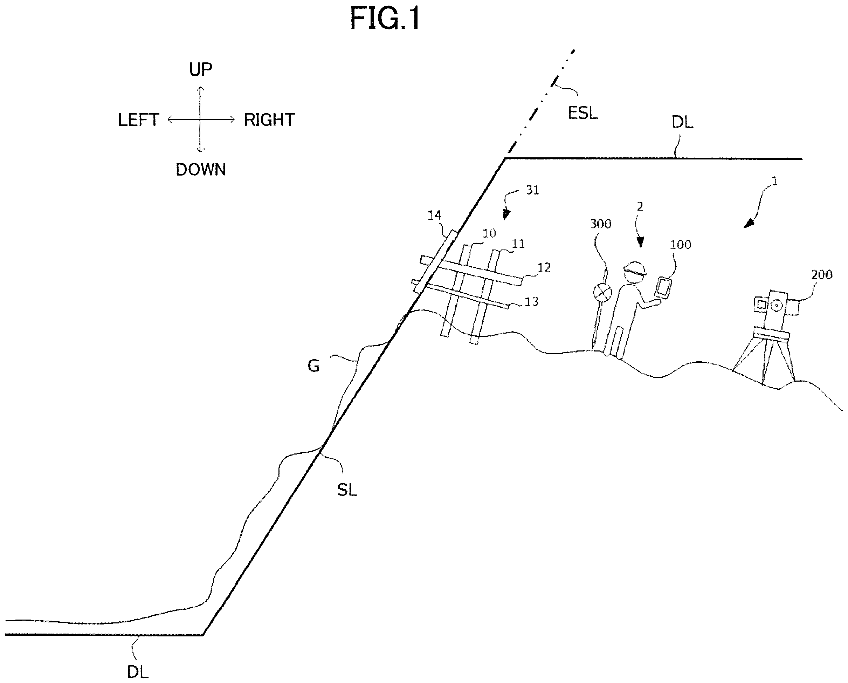

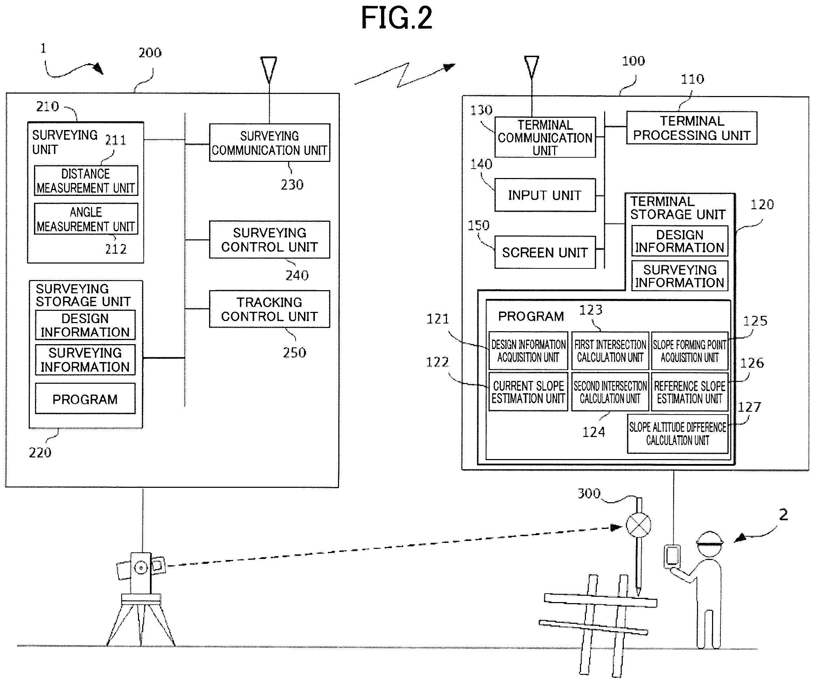

An embodiment of the present disclosure will be described in detail with reference to the drawings. FIG. 1 illustrates placement of a slope staking tool in a slope. FIG. 2 shows a configuration of a surveying system according to an embodiment of the present disclosure.

First, an outline of an operation of placing a slope stake in a slope will be described with reference to FIG. 1. FIG. 1 schematically shows a transverse section including a slope for placing a slope stake. With the figure oriented to make the letters readable, the up-down direction on the drawing plane corresponds to the height, whereas the left-right direction on the drawing plane corresponds to the horizontal direction in the transverse section including the slope. This figure shows an actual ground G representing an actual ground line, and a design line DL and a designed slope SL in civil engineering and construction work to be performed. In particular, on the design line DL, the designed slope SL is the diagonal line segment showing the designed slope. An imaginary extension ESL is the line extending from the designed slope SL beyond the design line DL. Note that the actual ground G is exaggerated and distorted to be easily distinguished from the design line DL. In civil engineering and construction work, a slope staking tool 31 is placed for cutting excessive soil and banking up deficient soil along the design line DL and the designed slope SL.

A surveying system 1 includes a terminal device 100 used by an operator 2, a surveying device 200, and a device 300 to be tracked. The operator 2 places the slope staking tool 31 using the surveying system 1 with these components.

The slope staking tool 31 mainly includes a first picket 10, a second picket 11, a first crossbeam 12, a second crossbeam 13, and a slope beam 14. The number of required crossbeams is not necessarily two. Each of the first and second crossbeams 12 and 13 is a plate- or column-like wood intersecting the first and second pickets 10 and 11 and extending across the first and second pickets 10 and 11. For example, the first crossbeam 12 is located above and the second crossbeam 13 is located below. Note that these first picket 10, second picket 11, first crossbeam 12, second crossbeam 13, and slope beam 14 may not have a uniform size.

The slope beam 14 of the slope staking tool 31 represents the orientation and inclination of a designed slope, and serves as a reference for cutting or banking at a site. The slope staking tool 31 is thus placed in a proper position as surveyed precisely using the surveying system 1.

The surveying device 200 is, according to an embodiment, a surveying instrument of a light wave type such as a total station (TS) on a known position coordinate, for example. The "light wave type such as TS" includes, in addition to the TS, measurement or other instruments capable of performing measurement equivalent to the TS with an automatic tracking function and using light waves without mounting any telescope. The surveying device 200 can automatically track a predetermined position of the device 300 to be tracked as a target. The device 300 to be tracked includes an optical element that reflects the light radiated from the surveying device 200 back to the surveying device 200. That is, the optical element is what is called a "retroreflective prism". The device 300 to be tracked may be a pole for surveying that has a typical length and includes a retroreflective prism.

Note that the surveying device 200 and the device 300 to be tracked are physically separated but fulfil the surveying function in cooperation with each other. The device 300 to be tracked may also be interpreted as being integrally included in the surveying device 200.

### <Configuration of System>

The surveying device 200 and the terminal device 100 will be described with reference to FIG. 2. The surveying device 200 includes a horizontal rotation driving unit and a telescope unit on the horizontal rotation driving unit with a vertical rotation driving unit interposed therebetween. The horizontal rotation driving unit is supported by a tripod and drives horizontal rotation. The vertical rotation drive unit is vertically rotatable. Although not shown, the surveying device 200 includes horizontal and vertical angle detection units as angle measurement units 212. The horizontal angle detection unit detects the horizontal rotation angle, whereas the vertical angle detection unit detects the vertical rotation angle. These horizontal and vertical angle detection units make it possible to perform measurement of the horizontal and vertical angles of the collimation direction, respectively.

The surveying device 200 further includes, as distance measurement units 211, for example, an electro-optical distance meter that measures the slope distance to the device 300 to be tracked. For the sake of convenience, these angle and distance measurement units 212 and 211 are collectively referred to as a "surveying unit 210."

The surveying device 200 further includes a surveying storage unit 220, a surveying communication unit 230, a surveying control unit 240, and a tracking control unit 250.

The surveying storage unit 220 stores, in advance, various programs for the surveying, tracking, or other controls; or information (e.g., the altitude) on the ground to be used at a construction site, design information, or other information.

The surveying communication unit 230 is communicative with external devices such as the terminal device 100 and is, for example, a wireless communication means.

The surveying control unit 240 functions to control the surveying by the surveying device 200. Specifically, the surveying control unit 240 automatically or manually collimates the device 300 to be tracked. The surveying control unit 240 detects the horizontal angle, the vertical angle, and the slope distance between the surveying device 200 and the device 300 to be tracked using the angle measurement units (i.e., the horizontal and vertical angle detection units) 212 and the distance measurement units 211 described above. Here, the retroreflective prism as an example of the device 300 to be tracked is attached to a pole. The distance from the prism to a tip of the pole is known. The surveying control unit 240 thus corrects the horizontal angle, vertical angle, and slope distance detected by the angle and distance measurement units 212 and 211, and obtains the position of the tip (i.e., the position of the upper or lower end) of the pole, as surveying results.

The tracking control unit 250 controls the drive of the horizontal and vertical rotation drive units to project tracking light and to continuously receive the tracking light reflected by the device 300 to be tracked, thereby tracking the device 300.

Another embodiment of the surveying device 200 is a GNSS surveying instrument. In this case, surveying is performed using a GNSS receiver as the device 300 to be tracked.

Examples of the terminal device 100 include a smartphone, a feature phone, a tablet, a handheld computer device (e.g., a personal digital assistant (PDA)), and a wearable terminal (e.g., a glasses-type device or a watch-type device). A general-purpose terminal is, with application software installed, usable as a portable display terminal of this embodiment. Such a terminal device 100 includes a screen unit 150 and is easily carriable at a work site. The screen unit 150 may be viewed hands-free or with one hand. The terminal device 100 may also include an internal power supply such as a battery and may thus be operatable for a certain period without requiring external power supply.

The terminal device 100 includes a terminal communication unit 130, a terminal storage unit 120, a terminal processing unit 110, an input unit 140, and the screen unit 150.

Although not shown, the terminal processing unit 110 executes the functions and/or methods implemented by codes or commands included in the programs stored in the terminal storage unit 120. Examples of the terminal processing unit 110 include a central processing unit (CPU), a microprocessor unit (MPU), a graphics processing unit (GPU), a microprocessor, a processor core, a multiprocessor, an application specific integrated circuit (ASIC), and a field-programmable gate array (FPGA). The terminal processing unit 110 may include a logic circuit or a dedicated circuit formed in an integrated circuit, for example, to execute the processing disclosed in the embodiment. These circuits may be one or more integrated circuits. A single integrated circuit may execute the plurality of processing described in the embodiment. Although not shown, the terminal device 100 may include a main storage unit that temporarily stores the programs to be read out from the terminal storage unit 120 and provides a workspace to the terminal processing unit 110.

The terminal communication unit 130 is communicative with the surveying communication unit 230 of the surveying device 200, and can receive the surveying results, position information, or other information. The surveying results are results of surveying the device 300 to be tracked using the surveying device 200. The position information (e.g., the horizontal angle, the vertical angle, and the slope distance to the pole tip) is calculated using the surveying control unit 240. The position information may be calculated, based on the surveying results, by the surveying device 200 or the terminal device 100. The communications may be wired or wireless. As long as mutual communications are established, any communication protocol may be used.

The input unit 140 is any one or a combination of all types of devices capable of receiving inputs from a user, that is, the operator 2 and providing the information related to the inputs to the terminal processing unit 110. Examples include, in addition to a hardware input means such as buttons, a software input means displayed on a display unit such as a touch panel, and an audio input means such as a remote controller or a microphone.

The screen unit 150 is any one or a combination of all types of devices capable of displaying a screen. Examples include a flat display such as a liquid crystal display or an organic light emitting diode (OLED) display, a curved display, a folding screen on a foldable terminal, a head-mounted display, or a device displayable through projection on a substance using a small projector.

The terminal storage unit 120 functions to store various necessary programs or various data. In addition, the terminal storage unit 120 can store the surveying information received by the terminal communication unit 130 and the position information calculated based on the surveying information. For example, the terminal storage unit 120 stores the design information including the information (e.g., the altitude) on the ground used at a construction site or the design information on a slope. The terminal storage unit 120 is any of various storage media such as a hard disk drive (HDD), a solid state drive (SSD), and a flash memory.

The design information includes blueprints necessary for construction works. Examples of the construction works include constructions of structures such as buildings, roads, railroads, tunnels, bridges, ditches, waterways, and rivers. The blueprints include plan views, longitudinal sectional views, and transverse sectional views; and the linear data, the point data, and the positions, coordinates, and altitudes of the points and line segments included in the views.

The terminal storage unit 120 stores, as application software programs, a design information acquisition unit 121, a current slope estimation unit 122, a first intersection calculation unit 123, a second intersection calculation unit 124, a slope forming point acquisition unit 125, a reference slope estimation unit 126, and a slope altitude difference calculation unit 127 that fulfil various functions. Among these, the design information acquisition unit 121, the current slope estimation unit 122, the first intersection calculation unit 123, and the second intersection calculation unit 124 fulfil the functions related to the placement of a slope staking tool. On the other hand, the slope forming point acquisition unit 125, the reference slope estimation unit 126, and the slope altitude difference calculation unit 127 fulfil the functions related to the placement of a cross-shaped staking tool.

The design information acquisition unit 121 mainly functions to acquire the design information including the designed slope from the design information stored in the terminal storage unit 120 or the surveying storage unit 220. For example, the design information acquisition unit 121 reads the linear data, the point data, the positions, coordinates, and altitudes of the points and line segments stored in the terminal storage unit 120. The design information acquisition unit 121 may acquire, as the design information, the information input by the operator 2 through the input unit 140. Alternatively, the design information acquisition unit 121 may transmit and receive, for acquisition, the design information stored in the surveying storage unit 220 of the surveying device 200 through the communications between the surveying communication unit 230 and the terminal communication unit 130.

The current slope estimation unit 122 functions to calculate the current slope GL in accordance with the results of surveying the current slope GL in at least two points using the surveying device 200. As will be described later, for example, the current slope estimation unit 122 surveys at least two points of the actual ground G which is the current slope. The current slope estimation unit 122 then transmits and receives, for acquisition, the results of surveying performed by the surveying device 200 and the position information through the communications between the surveying communication unit 230 and the terminal communication unit 130. The current slope estimation unit 122 then estimates the current slope GL in the transverse section including the designed slope based on the two points.

As a non-limiting example, if two surveying points are acquired, one method is to estimate, as the current slope GL, a straight line obtained by extending a line segment connecting the two points to both sides. If three or more surveying points are acquired, a straight line fitted by the least square method may be used.

The first intersection calculation unit 123 functions to calculate the coordinate of a first intersection C1 between the current slope GL and the designed slope SL using the current slope GL estimated by the current slope estimation unit 122 and the design information including the designed slope SL, and to display the coordinate on the screen unit 150.

While performing the surveying using the surveying device 200, the second intersection calculation unit 124 functions to calculate the altitude difference between any position on the placed crossbeam 12 and a plane including the designed slope SL and to display the altitude difference on the screen unit 150.

The slope forming point acquisition unit 125 functions to acquire position information of at least two points forming a reference slope. This will be described later in detail.

The reference slope estimation unit 126 functions to estimate a reference slope DS in accordance with the acquired position information on the at least two forming points. This will be described later in detail.

The slope altitude difference calculation unit 127 functions to calculate the distance from the position of surveying using the surveying device 200 to the reference slope DS in the normal direction NV of the reference slope DS and to display the distance on the screen unit. This will be described later in detail.

### <Function to Place Slope Stake>

Referring back to FIG. 1, one aspect of the objective by the present disclosure will be described again, and an outline of a staking guide function as an aspect of the surveying system, the staking assistance method, and the staking assistance program according to an embodiment of the present disclosure will be described.

The slope staking tool 31 is assumed to be obtained by putting a picket perpendicularly to a flat ground and placing a crossbeam in parallel to the ground. The surveying device 200 is also placed on the flat ground. In order to place the slope staking tool 31 in a slope, the surveying device 200 also needs to be placed on the slope. This is because the first and second pickets 10 and 11 are both put perpendicularly to the slope and an error may occur in the altitudes of the pickets or beams that are surveyed obliquely. In a support structure, such as a tripod, for supporting the surveying device 200 may fall down on a slope, which is dangerous.

On the other hand, there is a demand from construction sites to place the slope staking tool 31 even in a slope. The present disclosure is thus directed to a surveying system that supports the placement of the slope staking tool 31 in a slope while performing surveying with the surveying device 200 placed not on a slope but in a position where it can be safely fixed to another ground parallel to the horizontal direction. In this case, there is no need to put a picket perpendicularly to the slope or to place a crossbeam in parallel to the slope.

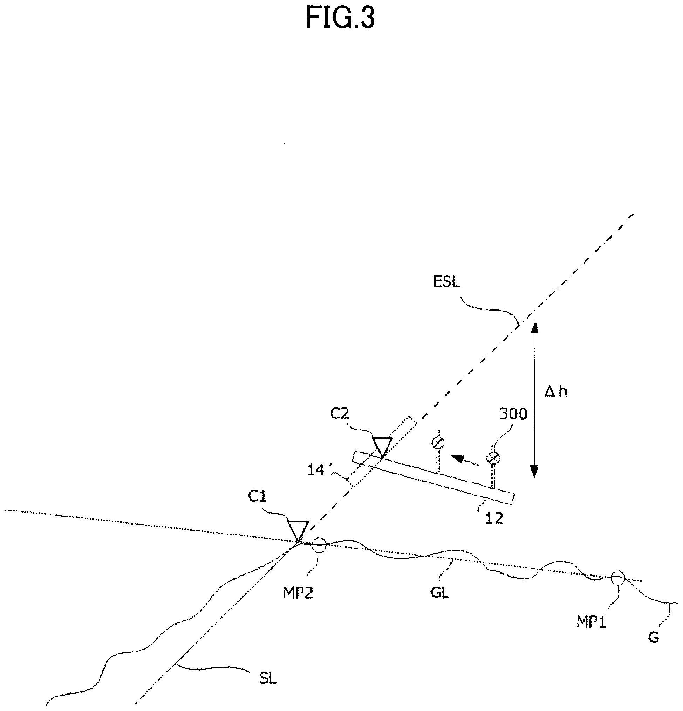

FIG. 3 illustrates placement of a slope staking tool in a slope. What is important in the slope staking tool 31 is a correctly oriented slope beam. The slope beam needs to be oriented along the slope. Two points in a transverse section are needed to determine the orientation. One of the two points may be defined by the intersection between the current ground and the slope. This intersection is referred to as the "first intersection C1". Here, being a slope, the current ground is referred to as the "current slope GL". The current slope GL may be estimated based on at least two forming points. For example, two forming points MP1 and MP2 shown in this figure are surveyed to acquire the position coordinates thereof. After that, the current slope GL is estimated based on the two points. The position coordinate of the first intersection C1 may be calculated by obtaining the intersection between the current slope GL and the designed slope SL. The position of the calculated first intersection C1 is searched in an actual site by the surveying device 200, and a point at which there is no difference in distance can be marked with a rivet, for example.

Subsequently, the other point for determining the orientation of the slope beam is determined as follows. The slope staking tool 31 is placed near the first intersection C 1. The picket of this slope staking tool 31 may not be perpendicular to the slope, and the crossbeam may not be horizontal to the slope. This figure shows only the crossbeam 12 and no other pickets or beams. In order to complete the slope staking tool 31 by placing a slope beam (the position 14' to be placed is indicated by the dotted line), the operator 2 causes the lower end of the device 300 to be tracked to abut on the upper surface, such as the top, of the crossbeam 12 and brings the lower end closer to the slope. At the same time, the altitude difference Δh between the surveying position (e.g., the lower end of the device 300 to be tracked) and the imaginary extension ESL is calculated in real time and displayed on the screen unit 150 of the terminal device 100. The operator 2 searches for the point where Δh is zero, while viewing this screen. Accordingly, the operator 2 finds out the point at which the crossbeam 12 and the imaginary extension ESL intersect with each other.
This intersection is referred to as a "second intersection C2". The position of the second intersection C2 may actually be marked on the crossbeam 12, for example. The slope beam 14 may be placed in correct position and orientation in accordance with the line segment connecting the first and second intersections C1 and C2 acquired in this manner. Note that the imaginary extension ESL is used for the sake of simple description, but the same applies to the case where the line is the designed slope SL.

### <Processing Flow of Placing Slope Staking Tool>

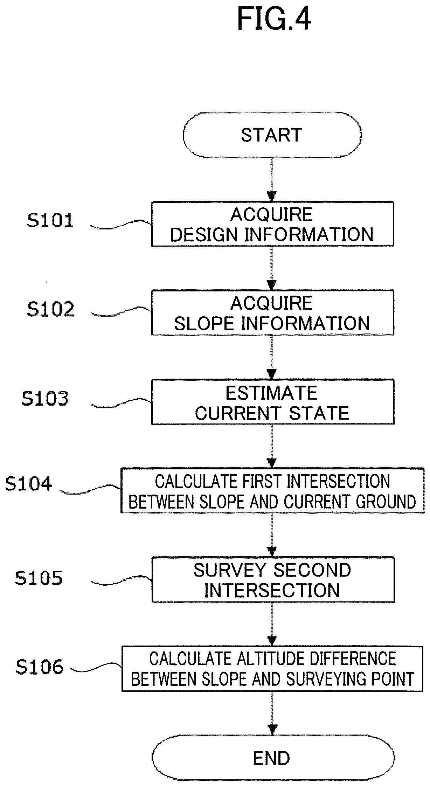

FIG. 4 is a flowchart illustrating a flow of the processing according to a staking assistance method and a staking assistance program using the surveying system according to an embodiment of the present disclosure.

First, in step S101, the design information acquisition unit 121 acquires design information including a designed slope. For example, the design information acquisition unit 121 reads a file of a predetermined transverse sectional view at a predetermined site stored in the terminal device 100.

In step S102, the surveying device 200 transmits the surveying information on the surveying acquired by the surveying device 200 to the terminal device 100. The surveying information acquisition unit 122 acquires the surveying information. For example, the surveying information acquisition unit 122 performs the surveying using the surveying device 200, and acquires the information on the position of the device 300 to be tracked.

In step S103, the current slope estimation unit 122 estimates the current slope GL in accordance with the surveying information received by the terminal device 100. For example, as described with reference to FIG. 3, the current slope GL is estimated in accordance with the two forming points MP1 and MP2.

In step S104, the first intersection calculation unit 123 calculates the coordinate of the first intersection C1 between the current slope GL and the designed slope SL or the imaginary extension ESL using the current slope GL and the design information including the designed slope SL.

In step S105, the second intersection calculation unit 124 searches for the second intersection C2, while the operator 2 surveys any position on the placed crossbeam using the surveying device 200.

In step S 106, even while the operator 2 searches for the second intersection C2, the second intersection calculation unit 124 calculates the altitude difference between the designed slope SL and the current surveying position and displays the altitude difference on the screen unit 150.

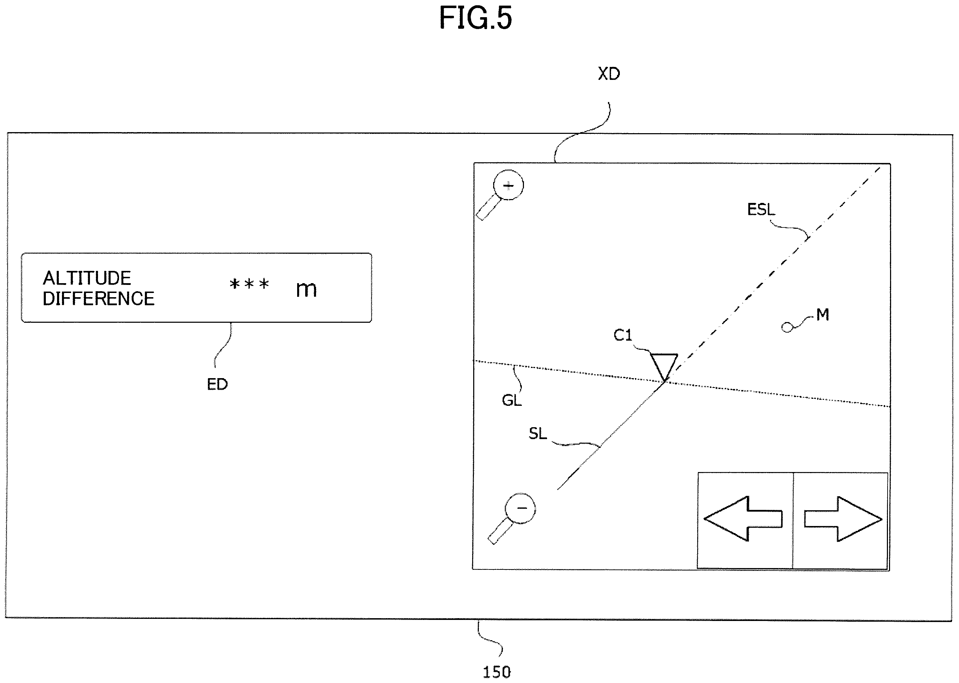

FIG. 5 is an example image to be displayed on the screen unit 150 of the terminal device 100. This figure shows a transverse-sectional display XD indicating a transverse section including the designed slope SL on the right, and an altitude difference display ED on the left. The transverse-sectional display XD displays a surveying point M indicating the current surveying position. The altitude difference display ED on the left shows the altitude difference between this current surveying position and the imaginary extension ESL.
That is, the operator 2 searches for the point where the altitude difference is zero, while viewing this screen.

As described above, according to the surveying system, the staking assistance method, and the staking assistance program of an embodiments of the present disclosure, the surveying system 1 is for assisting the placement of the slope staking tool 31 including the picket, the crossbeam, and the slope beam. The surveying system 1 includes, in addition to the surveying device 200 and the terminal device 100 including the screen unit 150: the design information acquisition unit 121 configured to acquire the design information including the designed slope SL; the current slope estimation unit 122 configured to calculate the current slope GL in accordance with the results of surveying the current slope GL in at least two points using the surveying device 200; the first intersection calculation unit 123 configured to calculate the coordinate of the first intersection C1 between the current slope GL and the designed slope SL using the current slope GL estimated by the current slope estimation unit 122 and the design information including the designed slope SL, and to display the coordinate on the screen unit 150; the second intersection calculation unit 124 configured to calculate, using the surveying device 200, the altitude difference between any position on the placed crossbeam 12 and a plane including the designed slope SL and to display the altitude difference on the screen unit 150. It is thus possible to find out the position for placing the slope beam 14 using the altitude difference with the design line and to place the slope staking tool 31 in a slope, even without placing the surveying device 200 on the slope.

### <Function to Place Cross-Shaped Stake>

Now, another function according to the embodiment of the present disclosure, that is, the function to place a cross-shaped stake will be described. The functions are fulfilled using the configurations common to the system shown in FIG. 2 and described above, and the description of the system configuration is thus omitted.

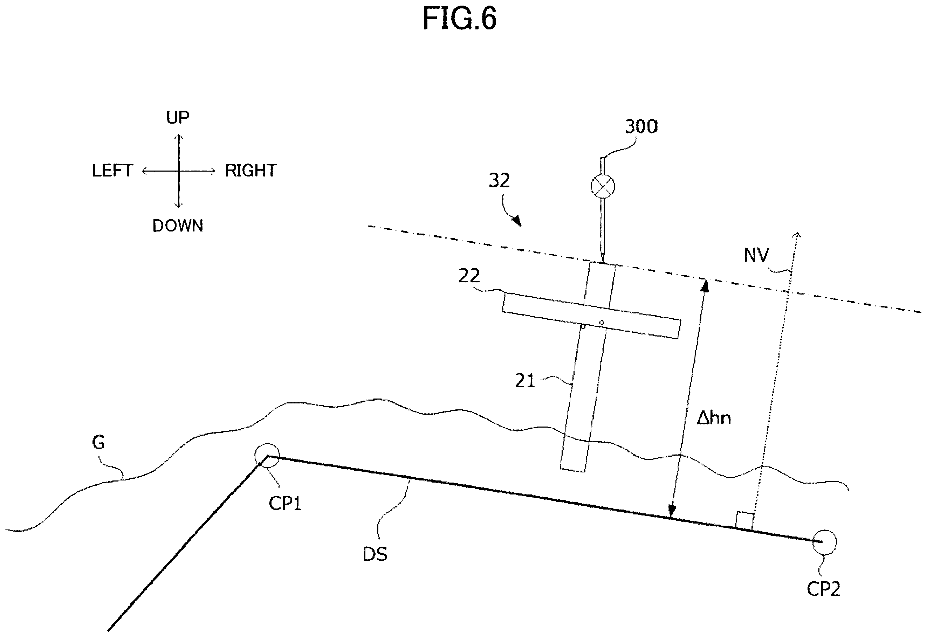

FIG. 6 illustrates placement of a cross-shaped staking tool in a slope. A cross-shaped stake is a kind of a staking tool which is also simply referred to as a "cross-shaped stake" and indicates a target altitude for baking soil as described above. A cross-shaped staking tool 32 basically includes a picket 21 and a crossbeam 22. Like FIGS 1 and 3, FIG. 6 shows a transverse section including a designed slope. With the figure oriented to make the letters readable, the up-down direction on the drawing plane corresponds to the height, whereas the left-right direction on the drawing plane corresponds to the horizontal direction in the transverse section including the slope.

In this figure, in addition to the actual ground G, the reference slope DS is indicated by a solid line. The reference slope DS may be a designed cross section estimated based on the forming points included in the design information. Alternatively, the current slope may be estimated based on, as the forming points, two surveying points at a site.

The cross-shaped staking tool 32 is used as a reference of the altitude for banking or cutting the soil, and has, on its crossbeam, for example, a target altitude marked with reference to the upper or lower end of the crossbeam. If the cross-shaped staking tool 32 is placed in a plane parallel to the horizontal direction, the altitude difference may be measured as it is. However, if the cross-shaped staking tool 32 is placed in a slope, an error may occur unless the altitude is measured taking into consideration the inclination with reference to the slope. For the purpose, placing the surveying device 200 on the slope is also conceivable, there is however a risk of falling down as described above. It is thus an aspect of an objective of the present disclosure to provide a surveying system, a staking assistance method, and a staking assistance program that allow calculation and display of an altitude difference based on a slope and accurate placement of a cross-shaped staking tool even in the slope. Now, details thereof will be described.

For example, assume that the reference slope DS is a designed cross section on which the cross-shaped staking tool 32 needs to indicate a reference. In this case, first, the information on the forming points CP 1 and CP2 are acquired from the design information to estimate the reference slope DS. As a method of this estimation, the line segment may be estimated by the same method as the estimation of the current slope GL for placing the slope staking tool described above. Next, the operator 2 measures the altitude by actually pressing the device 300 to be tracked against the head of the picket 21 or the upper end of the crossbeam 22, for example. The altitude measured at this time is not a simple altitude but the slope altitude difference Δhn which is the distance in the direction perpendicular to the reference slope DS, that is, in the normal direction. That is, using the information such as the position and inclination of the reference slope DS, a simulated altitude, such as an altitude where the reference slope is horizontal, may be calculated. Using the displayed slope altitude difference, the operator 2 marks, on a side surface or another part of the crossbeam 22, a reference indicating how far the upper or lower end of the crossbeam 22 is from the target.

### <Processing Flow of Placing Cross-Shaped Staking Tool>

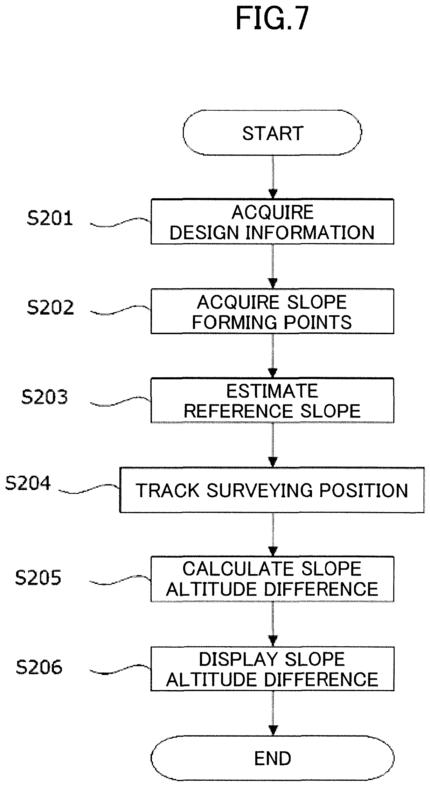

FIG. 7 is a flowchart illustrating a flow of the processing according to a staking assistance method and a staking assistance program using the surveying system according to an embodiment of the present disclosure.

First, in step S201, the design information acquisition unit 121 acquires design information including a designed slope. For example, the design information acquisition unit 121 reads a file of a predetermined transverse sectional view at a predetermined site stored in the terminal device 100.

In step S202, the slope forming point acquisition unit 125 acquires the position information on at least two points forming the reference slope DS. As described above, if the reference slope DS is the designed cross section, these two points are acquired by reading point data included in the design information. If the reference slope is the current slope, these two points are acquired by the surveying using the surveying device 200.

In step S203, the reference slope estimation unit 126 estimates the reference slope DS in accordance with the position information on the at least two forming points acquired in step S202. Based on the estimated and calculated information on the reference slope DS, the distance of the slope in the normal direction can be calculated.

In step S204, the slope altitude difference calculation unit 127 calculates the distance from the position of surveying using the surveying device 200 to the reference slope DS in the normal direction NV of the reference slope DS and displays the distance on the screen unit 150 of the terminal device 100.

As described above, according to the surveying system, the staking assistance method, and the staking assistance program of embodiments of the present disclosure, the surveying system 1 is for assisting placement of the cross-shaped staking tool 32 including the picket and the crossbeam. The surveying system 1 includes, in addition to the surveying device 200 and the terminal device 100 with the screen unit 150: the design information acquisition unit 121 configured to acquire the design information including the designed slope; the slope forming point acquisition unit 125 configured to acquire the position information on at least two points forming the reference slope DS; the reference slope estimation unit 126 configured to estimate the reference slope DS in accordance with the acquired position information on the at least two forming points; and the slope altitude difference calculation unit 127 configured to calculate the distance from the position of surveying using the surveying device 200 to the reference slope DS in the normal direction NV of the reference slope DS and to display the distance on the screen unit 150. It is thus possible to calculate the altitude difference in the direction perpendicular to the slope with reference to the slope for placing even the cross-shaped staking tool 32 in the slope and accurate grasping of the altitude difference between the designed plane and the cross-shaped stoke.

Thus, the embodiment of the present disclosure has been described hereinabove. However, the present disclosure is not limited to the embodiment described above.

### DESCRIPTION OF REFERENCE CHARACTERS

- 1: Surveying System
- 2: Operator
- 31: Slope Staking Tool
- 32: Cross-Shaped Staking Tool
- 100: Terminal Device
- 110: Terminal Processing Unit
- 120: Terminal Storage Unit
- 121: Design Information Acquisition Unit
- 122: Current Slope Estimation Unit
- 123: First Intersection Calculation Unit
- 124: Second Intersection Calculation Unit
- 125: Slope Forming Point Acquisition Unit
- 126: Reference Slope Estimation Unit
- 127: Slope Altitude Difference Calculation Unit
- 130: Terminal Communication Unit
- 140: Input Unit
- 150: Screen Unit
- 200: Surveying Device
- 210: Surveying Unit
- 211: Distance Measurement Unit
- 212: Angle Measurement Unit
- 220: Surveying Storage Unit
- 230: Surveying Communication Unit
- 240: Surveying Control Unit
- 250: Tracking Control Unit
- 300: Device to Be Tracked
- G: Actual Ground
- GL: Current Slope
- DL: Design Line
- SL: Designed Slope
- ESL: Imaginary Extension
- C1: First Intersection
- C2: Second Intersection
- DS: Reference Slope

## Claims

1. A surveying system (1) for assisting placement of a slope staking tool (31) including a picket, a crossbeam, and a slope beam, the surveying system (1) including a surveying device (200) and a terminal device (100) with a screen unit (150), the surveying system (1) comprising:
a design information acquisition unit (121) configured to acquire design information including a designed slope;
a current slope estimation unit (122) configured to calculate a current slope in accordance with a result of surveying the current slope in at least two points using the surveying device (200);
a first intersection calculation unit (123) configured to calculate a coordinate of a first intersection between the current slope and the designed slope using the current slope estimated by the current slope estimation unit (122) and the design information including the designed slope, and to display the coordinate on the screen unit (150); and
a second intersection calculation unit (124) configured to calculate, using the surveying device (200), an altitude difference between any position on the crossbeam placed and a plane including the designed slope and to display the altitude difference on the screen unit (150).

2. A staking assistance method of assisting placement of a slope staking tool (31) including a picket, a crossbeam, and a slope beam, using a surveying system including a surveying device (200) and a terminal device (100) with a screen unit (150), the staking assistance method comprising:
design information acquisition of acquiring design information including a designed slope, using a design information acquisition unit (121);
slope surveying of surveying a current slope in at least two points, using the surveying device (200);
current slope estimation of calculating the current slope in accordance with a result of surveying in the slope surveying, using a current slope estimation unit (122);
first intersection calculation of calculating a coordinate of a first intersection between the current slope and the designed slope using the current slope estimated in the current slope estimation and the design information including the designed slope and displaying the coordinate on the screen unit (150), using a first intersection calculation unit (123); and
second intersection calculation of calculating, using the surveying device (200), an altitude difference between any position on the crossbeam placed and a plane including the designed slope and displaying the altitude difference on the screen unit (150), using a second intersection calculation unit (124).

3. A staking assistance program of assisting placement of a slope staking tool (31) including a picket, a crossbeam, and a slope beam, using a surveying system (1) including a surveying device (200) and a terminal device (100) with a screen unit (150), the staking assistance program comprising:
design information acquisition of acquiring design information including a designed slope, using a design information acquisition unit (121);
slope surveying of surveying a current slope in at least two points using the surveying device (200);
current slope estimation of calculating the current slope in accordance with a result of surveying in the slope surveying, using a current slope estimation unit (122);
first intersection calculation of calculating a coordinate of a first intersection between the current slope and the designed slope using the current slope estimated in the current slope estimation and the design information including the designed slope and displaying the coordinate on the screen unit (150), using a first intersection calculation unit (123); and
second intersection calculation of calculating, using the surveying device (200), an altitude difference between any position on the crossbeam placed and a plane including the designed slope and displaying the altitude difference on the screen unit (150), using a second intersection calculation unit (124).

4. A surveying system (1) for assisting placement of a cross-shaped staking tool (32) including a picket and a crossbeam, the surveying system including a surveying device (200) and a terminal device (100) with a screen unit (150), the surveying system (1) comprising:
a design information acquisition unit (121) configured to acquire design information including a designed slope;
a slope forming point acquisition unit (125) configured to acquire position information on at least two points from the design information forming a reference slope;
a reference slope estimation unit (126) configured to estimate the reference slope in accordance with the position information acquired on the at least two points; and
a slope altitude difference calculation unit (127) configured to calculate a distance from a position of surveying using the surveying device (200) to the reference slope in a normal direction of the reference slope and to display the distance on the screen unit (150).

5. A staking assistance method of assisting placement of a cross-shaped staking tool (32) including a picket and a crossbeam, using a surveying system including a surveying device (200) and a terminal device (100) with a screen unit (150), the staking assistance method comprising:
design information acquisition of acquiring design information including a designed cross section, using a design information acquisition unit (121);
slope forming point acquisition of acquiring position information on at least two points from the design information forming a reference slope, using a slope forming point acquisition unit (125);
reference slope estimation of estimating the reference slope in accordance with the position information on the at least two points acquired in the slope forming point acquisition, using a reference slope estimation unit (126); and
slope altitude difference calculation of calculating a distance from a position of surveying using the surveying device (200) to the reference slope in a normal direction of the reference slope and displaying the distance on the screen unit (150), using a slope altitude difference calculation unit (127).

6. A staking assistance program of assisting placement of a cross-shaped staking tool (32) including a picket and a crossbeam, using a surveying system including a surveying device (200) and a terminal device (100) with a screen unit (150), the staking assistance program comprising:
design information acquisition of acquiring design information including a designed cross section, using a design information acquisition unit (121);
slope forming point acquisition of acquiring position information on at least two points from the design information forming a reference slope, using a slope forming point acquisition unit (125);
reference slope estimation of estimating the reference slope in accordance with the position information on the at least two points acquired in the slope forming point acquisition, using a reference slope estimation unit (126); and
slope altitude difference calculation of calculating a distance from a position of surveying using the surveying device (200) to the reference slope in a normal direction of the reference slope and displaying the distance on the screen unit (150), using a slope altitude difference calculation unit (127).

## Patentansprüche

1. Vermessungssystem (1) zur Unterstützung der Platzierung eines Böschungsabsteckwerkzeugs (31), das einen Pfosten, einen Querbalken und einen Böschungsbalken beinhaltet, wobei das Vermessungssystem (1) ein Vermessungsgerät (200) und ein Endgerät (100) mit einer Bildschirmeinheit (150) umfasst, wobei das Vermessungssystem (1) Folgendes aufweist:
eine Entwurfsinformation-Ermittlungseinheit (121), die zum Ermitteln von Entwurfsinformation, einschließlich einer geplanten Böschung, ausgebildet ist;
eine Schätzeinheit (122) zum Schätzen einer aktuellen Böschung, die dazu ausgebildet ist, eine aktuelle Böschung in Abhängigkeit von einem Ergebnis der Vermessung der aktuellen Böschung an mindestens zwei Punkten unter Verwendung des Vermessungsgeräts (200) zu berechnen;
eine erste Schnittpunkt-Berechnungseinheit (123), die dazu ausgebildet ist, eine Koordinate eines ersten Schnittpunkts zwischen der aktuellen Böschung und der geplanten Böschung unter Verwendung der von der aktuellen Böschungs-Schätzeinheit (122) geschätzten aktuellen Böschung und der die geplante Böschung beinhaltenden Entwurfsinformation zu berechnen und die Koordinate auf der Bildschirmeinheit (150) anzuzeigen; und
eine zweite Schnittpunkt-Berechnungseinheit (124), die dazu ausgebildet ist, unter Verwendung des Vermessungsgeräts (200) einen Höhenunterschied zwischen einer beliebigen Position auf dem platzierten Querbalken und einer die geplante Böschung beinhaltenden Ebene zu berechnen und den Höhenunterschied auf der Bildschirmeinheit (150) anzuzeigen.

2. Absteckunterstützungsverfahren zur Unterstützung der Platzierung eines Böschungsabsteckwerkzeugs (31), das einen Pfosten, einen Querbalken und einen Böschungsbalken beinhaltet, unter Verwendung eines Vermessungssystems, das ein Vermessungsgerät (200) und ein Endgerät (100) mit einer Bildschirmeinheit (150) umfasst, wobei das Absteckunterstützungsverfahren umfasst:
Entwurfsinformation-Ermittlung zum Ermitteln von Entwurfsinformation, die eine geplante Böschung beinhaltet, unter Verwendung einer Entwurfsinformation-Ermittlungseinheit (121);
Böschungsvermessung zur Vermessung einer aktuellen Böschung an mindestens zwei Punkten unter Verwendung des Vermessungsgeräts (200);
Schätzen der aktuellen Böschung zum Berechnen der aktuellen Böschung in Abhängigkeit von einem Vermessungsergebnis bei der Böschungsvermessung unter Verwendung einer Schätzeinheit (122) zum Schätzen der aktuellen Böschung;
erste Schnittpunktberechnung zum Berechnen einer Koordinate eines ersten Schnittpunkts zwischen der aktuellen Böschung und der geplanten Böschung unter Verwendung der bei der aktuellen Böschungs-Schätzung geschätzten aktuellen Böschung und der die geplante Böschung beinhaltenden Entwurfsinformation und Anzeigen der Koordinate auf der Bildschirmeinheit (150) unter Verwendung einer ersten Schnittpunkt-Berechnungseinheit (123); und
zweite Schnittpunktberechnung zum Berechnen eines Höhenunterschieds zwischen einer beliebigen Position auf dem platzierten Querbalken und einer die geplante Böschung beinhaltenden Ebene unter Verwendung des Vermessungsgeräts (200) und Anzeigen des Höhenunterschieds auf der Bildschirmeinheit (150) unter Verwendung einer zweiten Schnittpunkt-Berechnungseinheit (124).

3. Absteckunterstützungsprogramm zur Unterstützung der Platzierung eines Böschungsabsteckwerkzeugs (31), das einen Pfosten, einen Querbalken und einen Böschungsbalken beinhaltet, unter Verwendung eines Vermessungssystems (1), das ein Vermessungsgerät (200) und ein Endgerät (100) mit einer Bildschirmeinheit (15) aufweist, wobei das Absteckunterstützungsprogramm Folgendes umfasst:
Entwurfsinformation-Ermittlung zum Ermitteln von Entwurfsinformation, die eine geplante Böschung beinhaltet, unter Verwendung einer Entwurfsinformation-Ermittlungseinheit (121);
Böschungsvermessung zur Vermessung einer aktuellen Böschung an mindestens zwei Punkten unter Verwendung des Vermessungsgeräts (200);
Schätzen der aktuellen Böschung zum Berechnen der aktuellen Böschung in Abhängigkeit von einem Vermessungsergebnis bei der Böschungsvermessung unter Verwendung einer Schätzeinheit (122) zum Schätzen der aktuellen Böschung;
erste Schnittpunktberechnung zum Berechnen einer Koordinate eines ersten Schnittpunkts zwischen der aktuellen Böschung und der geplanten Böschung unter Verwendung der bei der aktuellen Böschungs-Schätzung geschätzten aktuellen Böschung und der die geplante Böschung beinhaltenden Entwurfsinformation und Anzeigen der Koordinate auf der Bildschirmeinheit (150) unter Verwendung eines ersten Schnittpunkt-Berechnungseinheit (123); und
zweite Schnittpunktberechnung zum Berechnen eines Höhenunterschieds zwischen einer beliebigen Position auf dem platzierten Querbalken und einer die geplante Böschung beinhaltenden Ebene unter Verwendung des Vermessungsgeräts (200) und Anzeigen des Höhenunterschieds auf der Bildschirmeinheit (150) unter Verwendung einer zweiten Schnittpunkt-Berechnungseinheit (124).

4. Vermessungssystem (1) zur Unterstützung der Platzierung eines kreuzförmigen Absteckwerkzeugs (32), das einen Pfosten und einen Querbalken beinhaltet, wobei das Vermessungssystem ein Vermessungsgerät (200) und ein Endgerät (100) mit einer Bildschirmeinheit (150) umfasst, wobei das Vermessungssystem (1) Folgendes aufweist:
eine Entwurfsinformation-Ermittlungseinheit (21), die zum Ermitteln von Entwurfsinformation, einschließlich einer geplanten Böschung, ausgebildet ist;
eine Böschungsbildungspunkt-Ermittlungseinheit (125), die dazu ausgebildet ist, Positionsinformation von mindestens zwei Punkten aus der Entwurfsinformation zu ermitteln, die eine Referenzböschung bilden;
eine Referenzböschungs-Schätzeinheit (126), die dazu ausgebildet ist, die Referenzböschung in Abhängigkeit von der Positionsinformation zu schätzen, die an den mindestens zwei Punkten ermittelt wird; und
eine Böschungshöhendifferenz-Berechnungseinheit (127), die dazu ausgebildet ist, eine Entfernung von einer Vermessungsposition zu der Referenzböschung in einer Normalrichtung der Referenzböschung unter Verwendung des Vermessungsgeräts (200) zu berechnen und die Entfernung auf der Bildschirmeinheit (150) anzuzeigen.

5. Absteckunterstützungsverfahren zur Unterstützung der Platzierung eines kreuzförmigen Absteckwerkzeugs (32), das einen Pfosten und einen Querbalken beinhaltet, unter Verwendung eines Vermessungssystems, das ein Vermessungsgerät (200) und ein Endgerät (100) mit einer Bildschirmeinheit (150) aufweist, wobei das Absteckunterstützungsverfahren Folgendes umfasst:
Entwurfsinformation-Ermittlung zum Ermitteln von Entwurfsinformation, die einen geplanten Querschnitt beinhaltet, unter Verwendung einer Entwurfsinformation-Ermittlungseinheit (121);
Böschungsbildungspunkt-Ermittlung zum Ermitteln von Positionsinformation über mindestens zwei Punkte aus der Entwurfsinformation, die eine Referenzböschung bilden, unter Verwendung einer Böschungsbildungspunkt-Ermittlungseinheit (125);
Referenzböschungs-Schätzung zum Schätzen der Referenzböschung in Abhängigkeit von der Positionsinformation von den mindestens zwei Punkten, die bei der Böschungsbildungspunkt-Ermittlung ermittelt wird, unter Verwendung einer Referenzböschungs-Schätzeinheit (126); und
Böschungshöhenunterschied-Berechnung zum Berechnen einer Entfernung von einer Vermessungsposition zu der Referenzböschung in einer Normalrichtung der Referenzböschung unter Verwendung des Vermessungsgeräts (200) und Anzeigen der Entfernung auf der Bildschirmeinheit (150) unter Verwendung einer Böschungshöhendifferenz-Berechnungseinheit (127).

6. Absteckunterstützungsprogramm zur Unterstützung der Platzierung eines kreuzförmigen Absteckwerkzeugs (32), das einen Pfosten und einen Querbalken beinhaltet, wobei das Vermessungssystem ein Vermessungsgerät (200) und ein Endgerät (100) mit einer Bildschirmeinheit (150) umfasst, wobei das Absteckunterstützungsprogramm Folgendes umfasst:
Entwurfsinformation-Ermittlung zum Ermitteln von Entwurfsinformation, die einen geplanten Querschnitt beinhaltet, unter Verwendung einer Entwurfsinformation-Ermittlungseinheit (121);
Böschungsbildungspunkt-Ermittlung zum Ermitteln von Positionsinformation von mindestens zwei Punkten aus der Entwurfsinformation, die eine Referenzböschung bilden, unter Verwendung einer Böschungsbildungspunkt-Ermittlungseinheit (125);
Referenzböschungs-Schätzung zum Schätzen der Referenzböschung in Abhängigkeit von der Positionsinformation von den mindestens zwei Punkten, die bei der Böschungsbildungspunkt-Ermittlung ermittelt wird, unter Verwendung einer Referenzböschungs-Schätzeinheit (126); und
Böschungshöhendifferenz-Berechnung zum Berechnen einer Entfernung von einer Vermessungsposition zu der Referenzböschung in einer Normalrichtung der Referenzböschung unter Verwendung des Vermessungsgeräts (200) und Anzeigen der Entfernung auf der Bildschirmeinheit (150) unter Verwendung einer Böschungshöhendifferenz-Berechnungseinheit (127).

## Revendications

1. Système de géométrage (1) pour assistance au placement d'un outil de piquetage de pente (31) incluant un piquet, une traverse, et une poutre de pente, le système de géométrage (1) incluant un dispositif de géométrage (200) et un dispositif mobile (100) doté d'une unité formant écran (150), le système de géométrage (1) comprenant :
une unité d'acquisition d'informations de conception (121) configurée pour acquérir des informations de conception incluant une pente conçue ;
une unité d'estimation de pente actuelle (122) configurée pour calculer une pente actuelle conformément à un résultat de géométrage de la pente actuelle pour au moins deux points à l'aide du dispositif de géométrage (200) ;
une première unité de calcul d'intersection (123) configurée pour calculer des coordonnées d'une première intersection entre la pente actuelle et la pente conçue à l'aide de la pente actuelle estimée par l'unité d'estimation de pente actuelle (122) et des informations de conception incluant la pente conçue, et pour afficher les coordonnées sur l'unité formant écran (150), et
une seconde unité de calcul d'intersection (124) configurée pour calculer, à l'aide du dispositif de géométrage (200), une différence d'altitude entre une position quelconque sur la traverse placée et un plan incluant la pente conçue, et pour afficher la différence d'altitude sur l'unité formant écran (150).

2. Procédé d'assistance au piquetage pour assistance au placement d'un outil de piquetage de pente (31) incluant un piquet, une traverse, et une poutre de pente, à l'aide d'un système de géométrage incluant un dispositif de géométrage (200) et un dispositif mobile (100) doté d'une unité formant écran (150), le procédé d'assistance au piquetage comprenant les étapes suivantes :
une acquisition d'informations de conception pour acquérir des informations de conception incluant une pente conçue, à l'aide d'une unité d'acquisition d'informations de conception (121) ;
un géométrage de pente pour un géométrage de la pente actuelle pour au moins deux points, à l'aide du dispositif de géométrage (200) ;
une estimation de pente actuelle pour calculer la pente actuelle conformément à un résultat de géométrage lors du géométrage de pente, à l'aide de l'unité d'estimation de pente actuelle (122) ;
un premier calcul d'intersection pour calculer des coordonnées d'une première intersection entre la pente actuelle et la pente conçue à l'aide de la pente actuelle estimée lors de l'estimation de pente actuelle et des informations de conception incluant la pente conçue, et pour afficher les coordonnées sur l'unité formant écran (150), à l'aide d'une première unité de calcul d'intersection (123), et
un second calcul d'intersection pour calculer, à l'aide du dispositif de géométrage (200), une différence d'altitude entre une position quelconque sur la traverse placée et un plan incluant la pente conçue, et pour afficher la différence d'altitude sur l'unité formant écran (150), à l'aide d'une seconde unité de calcul d'intersection (124).

3. Programme d'assistance au piquetage pour assistance au placement d'un outil de piquetage de pente (31) incluant un piquet, une traverse, et une poutre de pente, à l'aide d'un système de géométrage (1) incluant un dispositif de géométrage (200) et un dispositif mobile (100) doté d'une unité formant écran (150), le programme d'assistance au piquetage comprenant les étapes suivantes :
une acquisition d'informations de conception pour acquérir des informations de conception incluant une pente conçue, à l'aide d'une unité d'acquisition d'informations de conception (121) ;
un géométrage de pente pour un géométrage de la pente actuelle pour au moins deux points à l'aide du dispositif de géométrage (200) ;
une estimation de pente actuelle pour calculer la pente actuelle conformément à un résultat de géométrage lors du géométrage de pente, à l'aide de l'unité d'estimation de pente actuelle (122) ;
un premier calcul d'intersection pour calculer des coordonnées d'une première intersection entre la pente actuelle et la pente conçue à l'aide de la pente actuelle estimée lors de l'estimation de pente actuelle et des informations de conception incluant la pente conçue, et pour afficher les coordonnées sur l'unité formant écran (150), à l'aide d'une première unité de calcul d'intersection (123), et
un second calcul d'intersection pour calculer, à l'aide du dispositif de géométrage (200), une différence d'altitude entre une position quelconque sur la traverse placée et un plan incluant la pente conçue, et pour afficher la différence d'altitude sur l'unité formant écran (150), à l'aide d'une seconde unité de calcul d'intersection (124).

4. Système de géométrage (1) pour assistance au placement d'un outil de piquetage cruciforme (32) incluant un piquet et une traverse, le système de géométrage incluant un dispositif de géométrage (200) et un dispositif mobile (100) doté d'une unité formant écran (150), le système de géométrage (1) comprenant :
une unité d'acquisition d'informations de conception (121) configurée pour acquérir des informations de conception incluant une pente conçue ;
une unité d'acquisition de point de formation de pente (125) configurée pour acquérir des informations de position sur au moins deux points à partir des informations de conception formant une pente de référence ;
une unité d'estimation de pente de référence (126) configurée pour estimer la pente de référence conformément aux informations de position acquises sur les au moins deux points, et
une unité de calcul de différence d'altitude de pente (127) configurée pour calculer une distance d'une position de géométrage à l'aide du dispositif de géométrage (200) jusqu'à la pente de référence dans une direction normale de la pente de référence, et pour afficher la distance sur l'unité formant écran (150).

5. Procédé d'assistance au piquetage pour assistance au placement d'un outil de piquetage cruciforme (32) incluant un piquet et une traverse, à l'aide d'un système de géométrage incluant un dispositif de géométrage (200) et un dispositif mobile (100) doté d'une unité formant écran (150), le procédé d'assistance au piquetage comprenant les étapes suivantes :
une acquisition d'informations de conception pour acquérir des informations de conception incluant une section transversale de conception, à l'aide d'une unité d'acquisition d'informations de conception (121) ;
une acquisition de point de formation de pente pour acquérir des informations de position sur au moins deux points à partir des informations de conception formant une pente de référence, à l'aide de l'unité d'acquisition de point de formation de pente (125) ;
une estimation de pente de référence pour estimer la pente de référence conformément aux informations de position sur les au moins deux points acquis lors de l'acquisition de point de formation de pente, à l'aide d'une unité d'estimation de pente de référence (126), et
un calcul de différence d'altitude de pente pour calculer une distance d'une position de géométrage à l'aide du dispositif de géométrage (200) jusqu'à la pente de référence dans une direction normale de la pente de référence, et pour afficher la distance sur l'unité formant écran (150), à l'aide d'une unité de calcul de différence d'altitude de pente (127).

6. Programme d'assistance au piquetage pour assistance au placement d'un outil de piquetage cruciforme (32) incluant un piquet et une traverse, à l'aide d'un système de géométrage incluant un dispositif de géométrage (200) et un dispositif mobile (100) doté d'une unité formant écran (150), le programme d'assistance au piquetage comprenant les étapes suivantes :
une acquisition d'informations de conception pour acquérir des informations de conception incluant une section transversale de pente, à l'aide d'une unité d'acquisition d'informations de conception (121) ;
une acquisition de point de formation de pente pour acquérir des informations de position sur au moins deux points à partir des informations de conception formant une pente de référence, à l'aide de l'unité d'acquisition de point de formation de pente (125) ;
une estimation de pente de référence pour estimer la pente de référence conformément aux informations de position sur les au moins deux points acquis lors de l'acquisition de point de formation de pente, à l'aide d'une unité d'estimation de pente de référence (126), et
un calcul de différence d'altitude de pente pour calculer une distance d'une position de géométrage à l'aide du dispositif de géométrage (200) jusqu'à la pente de référence dans une direction normale de la pente de référence, et pour afficher la distance sur l'unité formant écran (150), à l'aide d'une unité de calcul de différence d'altitude de pente (127).
